# FASCICULE DE BREVET EUROPEEN

(11) **EP 3 575 562 B1**
(45) Date de publication et mention de la délivrance du brevet: **30.06.2021**
(21) Numéro de dépôt: 19176601.3
(22) Date de dépôt: 24.05.2019
(51) Int. Cl.: F01D 25/18, F02C 7/36, F16H 57/04

(54) **SYSTÈME DE TRANSMISSION DE PUISSANCE COMPRENANT UN DISPOSITIF DE RÉCUPÉRATION D'HUILE DE LUBRIFICATION ET TURBOMACHINE ÉQUIPÉE D'UN TEL SYSTÈME DE TRANSMISSION DE PUISSANCE**
LEISTUNGSÜBERTRAGUNGSSYSTEM, DAS EINE SCHMIERÖLRÜCKGEWINNUNGSVORRICHTUNG UMFASST, UND MIT EINEM SOLCHEN LEISTUNGSÜBERTRAGUNGSSYSTEM AUSGESTATTETES TURBOTRIEBWERK
POWER TRANSMISSION SYSTEM COMPRISING A DEVICE FOR RECOVERING LUBRICATING OIL AND TURBINE ENGINE EQUIPPED WITH SUCH A POWER TRANSMISSION SYSTEM

(30) Priorité: 28.05.2018 FR 1854532
(43) Date de publication de la demande: 04.12.2019
(73) Titulaire: SAFRAN AIRCRAFT ENGINES, 75015 Paris (FR)
(72) Inventeur: CHEVILLOT, Fabrice, Joël, Luc, 77550 MOISSY-CRAMAYEL (FR); BECOULET, Julien, Fabien, Patrick, 77550 MOISSY-CRAMAYEL (FR); NEGRI, Arnaud, Nicolas, 77550 MOISSY-CRAMAYEL (FR); PATSOURIS, Emmanuel, Pierre, Dimitri, 77550 MOISSY-CRAMAYEL (FR)
(74) Mandataire: Gevers & Orès

(56) Documents cités:
- DE-C- 376 381
- FR-A1- 3 054 264
- US-A1- 2015 300 255
- US-A1- 2017 254 407

## Description

### 1. Domaine de l'invention

Le domaine de la présente invention est celui de la propulsion aéronautique et plus particulièrement celui des turbomachines comportant des organes rotatifs nécessitant une lubrification importante.

### 2. Etat de la technique

Certaines turbomachines telles que des turboréacteurs double flux ou des turbopropulseurs à doublet d'hélices contrarotatives sont équipées d'un mécanisme de transmission de puissance tel qu'un réducteur de vitesse différentiel à train d'engrenage épicycloïdal ou un réducteur de vitesse à train d'engrenage planétaire (désigné par l'acronyme anglais « RGB » pour « Réduction Gear Box). Les réducteurs différentiels à train d'engrenage épicycloïdal, c'est-à-dire que tous les organes sont mobiles, sont applicables aux turbopropulseurs à doublet d'hélices. Les réducteurs planétaires, c'est-à-dire que le porte-satellite est fixe et que la couronne est mobile, sont applicables à un turbopropulseur à une hélice ou à un turboréacteur double flux équipé d'une soufflante. Des exemples de mécanisme de transmission de puissance sont décrits dans les documents US-A1-2017/254407 et FR-A1-3054264. Nous nous intéressons plus particulièrement à ce dernier cas (turboréacteur double flux avec soufflante). De manière générale, un arbre de transmission de puissance entraîne l'arbre de soufflante du turboréacteur double flux ou l'arbre de rotor des hélices via le réducteur de vitesse. Les arbres de soufflante ou les arbres des hélices sont supportés et guidés par des paliers qui comprennent des éléments roulants tels que des billes ou des rouleaux. De tels réducteurs de vitesses sont équipés de plusieurs roues et/ou pignons d'engrenage rotatifs dont la lubrification est un aspect primordial pour le bon fonctionnement de la turbomachine et son rendement. Lorsque le réducteur de vitesse n'est pas suffisamment lubrifié, les frottements entre les dents des roues et/ou pignons d'engrenage ou au niveau des paliers entraînent leurs usures prématurées et ainsi une baisse du rendement du réducteur de vitesse. Ces paliers, roues et/ou pignons d'engrenage des réducteurs de vitesse peuvent générer une puissance thermique très élevée pour garantir un bon rendement impliquant la nécessité d'un système de lubrification conçu pour envoyer un débit d'huile important pouvant atteindre plusieurs milliers de litres par heure, par exemple supérieur à 5000 litres par heure pour lubrifier le réducteur de vitesse et les paliers. L'un des inconvénients d'un tel système de lubrification est la difficulté de pouvoir récupérer et évacuer un tel débit d'huile.

Le système de lubrification comprend un ou plusieurs carters formant une enceinte dans laquelle est contenu le réducteur de vitesse et les paliers. L'évacuation de l'huile s'effectue de manière générale vers la partie basse de l'enceinte (six heures). L'enceinte comprend également des moyens d'évacuation comme des canalisations qui renvoient l'huile dans le système de lubrification. Dans le cas d'un réducteur de vitesse à train d'engrenage épicycloïdal, c'est-à-dire que le planétaire et le porte-satellites sont rotatifs alors que la couronne externe est fixe, des moyens d'évacuation sont aménagés, de manière complexe, en partie inférieure de la couronne externe de sorte à évacuer l'huile des parties internes du réducteur de vitesse vers la partie inférieure de l'enceinte. A l'inverse, dans le cas d'un réducteur de vitesse planétaire avec la couronne externe rotative, l'évacuation est davantage complexe. En effet, lors de la rotation de la couronne externe, l'huile est projetée par effet centrifuge sur toute la paroi de l'enceinte dont le volume est assez important. L'huile progresse par gravité vers la partie basse de l'enceinte pour son évacuation. Cependant, la récupération n'est pas rapide et efficace compte tenu du débit élevé d'huile circulant dans l'enceinte et dans le système de lubrification.

Le brevet n°FR3052322 décrit un exemple de réducteur de vitesse différentiel à train d'engrenage épicycloïdal et un dispositif de récupération d'huile évitant que l'huile ne s'accumule dans l'enceinte en formant des zones d'accumulation et évacuant l'huile rapidement. Le dispositif de récupération comprend une gouttière annulaire ménagée autour de la couronne externe du réducteur de vitesse. La gouttière comprend une chambre de récupération et une première portion de paroi disposée au moins en partie en regard de moyens d'éjection d'huile de manière à guider l'huile projetée sur celle-ci vers la chambre de récupération de l'huile. La première portion de paroi est une ailette qui forme un orifice orienté vers les moyens d'éjection. Cette ailette est entourée par d'autres portions de parois annulaires formant une cuvette et la chambre présente une ouverture d'entrée latérale par laquelle transite l'huile. Un des inconvénients de cette gouttière est son encombrement radial qui influe sur la masse de la turbomachine. Par ailleurs, cette gouttière est complexe de par ses nombreuses parois, ailettes et cuvettes formées pour éviter les rétentions d'huile et le guidage de l'huile vers la chambre de récupération ce qui influe sur le coût de fabrication et la faisabilité du dispositif de récupération et de la turbomachine.

### 3. Objectif de l'invention

La présente invention a notamment pour objectif de fournir un dispositif de récupération amélioré permettant de récupérer, de contenir et d'évacuer rapidement un débit d'huile important vers un circuit de lubrification tout en étant simple de conception et en réduisant l'encombrement radial de la gouttière.

### 4. Exposé de l'invention

On parvient à cet objectif conformément à l'invention grâce à un système de transmission de puissance entre un arbre de rotor d'axe longitudinal X d'une turbomachine et un arbre de puissance d'axe longitudinal X, le système de transmission comprenant
- un carter fixe annulaire de la turbomachine,
- un réducteur de vitesse apte à réduire la vitesse de l'arbre de rotor, ledit réducteur de vitesse comprenant un planétaire configuré pour être solidaire en rotation de l'arbre de puissance, une couronne externe configurée pour entraîner en rotation l'arbre de rotor suivant l'axe longitudinal X, et un porte-satellites,
- un dispositif de récupération d'huile éjectée par effet centrifuge dans la turbomachine, le dispositif de récupération comprenant une gouttière annulaire destinée à récupérer l'huile éjectée du réducteur de vitesse, la gouttière étant solidarisée au carter fixe annulaire entourant ladite gouttière et comportant une chambre de récupération et une première portion de paroi disposée au moins en partie en regard de moyens d'éjection d'huile du réducteur de vitesse de manière à diriger l'huile projetée sur celle-ci vers la chambre de récupération de l'huile,
la couronne comprenant une patte annulaire s'étendant vers l'extérieur suivant un axe radial Z perpendiculaire à l'axe longitudinal X et comportant au moins en partie les moyens d'éjection éjectant l'huile de la couronne, et la chambre de récupération étant pourvue d'une ouverture d'entrée orientée radialement vers l'extérieur et définie dans un plan radialement inférieur à un plan dans lequel est défini un orifice de sortie des moyens d'éjection.

Ainsi, cette solution permet d'atteindre l'objectif susmentionné. En particulier, la position de la chambre de récupération permet de ne pas impacter l'encombrement radial dans une enceinte déjà encombrée du réducteur de vitesse et des paliers car la chambre ne s'étend pas au-delà de cet orifice de sortie du réducteur de vitesse. De plus, la configuration de la gouttière est facile à fabriquer et à mettre en œuvre tout en permettant d'une part, les déplacements relatifs entre la couronne externe du réducteur de vitesse et la gouttière, et d'autre part une récupération efficace de l'huile. En effet, la couronne externe étant mobile, une majorité de l'huile est évacuée de la couronne externe via la patte annulaire et au moyen de la force centrifuge avec une grande force. La chambre de récupération est donc au plus proche de la périphérie de la couronne externe du réducteur de vitesse, notamment de la patte annulaire, pour réduire l'encombrement radial. Le diamètre extérieur du système est réduit tout en évitant des jeux radiaux entre des pièces mobiles et fixes dudit système.

Suivant une caractéristique de l'invention, le réducteur de vitesse est un réducteur différentiel ou un réducteur planétaire.

Suivant une autre caractéristique de l'invention, le porte-satellites est fixe par rapport au planétaire.

Suivant une autre caractéristique de l'invention, la patte annulaire comprend une périphérie annulaire et la projection orthogonale de la périphérie annulaire étant agencée radialement à l'extérieur de la chambre de récupération.

Suivant une autre caractéristique de l'invention, la gouttière comprend une deuxième portion de paroi reliée à une de ses extrémités à la première portion de paroi et à une autre de ses extrémités à la chambre de récupération, l'ouverture d'entrée étant agencée en regard d'une partie de la deuxième portion de paroi.

Suivant une autre caractéristique de l'invention, la chambre de récupération est disposée en amont de la patte annulaire de la couronne externe, la première portion de paroi étant reliée à une troisième portion de paroi s'étendant en aval de la patte annulaire.

Suivant une autre caractéristique de l'invention, la chambre de récupération présente une section axiale sensiblement en forme de U de manière à stocker une quantité importante d'huile et à éviter que l'huile ne se déverse dans l'enceinte de la turbomachine et notamment sur le réducteur de vitesse qui est installé dans cette enceinte avec la gouttière.

Suivant une caractéristique de l'invention, la gouttière comprend une paroi de rétention annulaire solidarisée à une des parois latérales formant une branche du U de la chambre de récupération et bordant au moins une partie de l'ouverture d'entrée. Une telle paroi de rétention permet d'améliorer la rétention de la chambre de récupération et permet d'éviter que l'huile ne déborde de celle-ci.

Suivant une caractéristique de l'invention, la première portion de paroi est conique ou tronconique de manière à favoriser le guidage de l'huile vers la chambre de récupération et éviter que l'huile soit dirigée vers le réducteur.

De manière avantageuse, la première portion de paroi est disposée axialement à l'opposé de la chambre de récupération de sorte à favoriser la progression de l'huile vers la chambre de récupération.

Suivant une autre caractéristique, la gouttière est munie d'une ouverture de sortie d'axe radial située dans une partie la plus inférieure du réducteur de vitesse suivant l'axe radial et orientée vers l'extérieur du réducteur de vitesse de sorte à permettre l'évacuation de l'huile de la gouttière vers la partie inférieure de l'enceinte.

De manière avantageuse, mais non limitativement, la gouttière est réalisée à partir d'une tôle. Cela permet d'avoir une gouttière légère et économique.

Selon une autre caractéristique, la chambre de récupération est pourvue d'une ouverture d'entrée orientée radialement en regard de la paroi de la gouttière.

Suivant un mode de réalisation de l'invention, la gouttière comprend deux chambres de récupération opposées axialement et disposées de part et d'autre des moyens d'éjection d'huile.

Suivant un autre mode de réalisation de l'invention, le moyen d'éjection d'huile présente une orientation angulaire par rapport à l'axe radial, l'orientation comprenant une composante axiale selon l'axe longitudinal X vers la gouttière. Une telle configuration peut permettre d'éviter les éclaboussures sur la paroi de la gouttière lors de l'éjection de l'huile par centrifugation.

Suivant une caractéristique de l'invention, la couronne externe est fixée sur l'arbre de rotor au moyen d'une bride laquelle comprend au moins en partie les moyens d'éjection d'huile par laquelle s'éjecte l'huile par effet centrifuge.

Suivant une autre caractéristique, la bride est formée d'une portée annulaire solidaire de l'arbre de rotor et s'étendant radialement vers l'extérieur, et d'une patte annulaire de la couronne externe qui s'étend radialement vers l'extérieur, la patte annulaire et la portée annulaire étant en appui l'une contre l'autre, les moyens d'éjection comprenant des canaux formés entre la portée annulaire et la patte annulaire.

Suivant une autre caractéristique l'arbre de rotor est un arbre de soufflante.

Suivant une caractéristique de l'invention, la couronne externe est monobloc.

Suivant un autre mode de réalisation de l'invention, la couronne externe est formée en deux parties avec une première partie de couronne et une deuxième partie de couronne, et la bride est formée en trois parties avec une première partie de patte annulaire s'étendant radialement vers l'extérieur et solidaire de la première partie de couronne, une deuxième partie de patte annulaire s'étendant radialement vers l'extérieur et solidaire de la deuxième partie de couronne, et une portée annulaire s'étendant radialement vers l'extérieur et solidaire de l'arbre de soufflante, les moyens d'éjection d'huile comprenant des canaux formés au moins entre la portée, les première et deuxième parties de patte annulaire.

L'invention concerne également une turbomachine comportant, un arbre de rotor d'axe longitudinal X, un arbre de puissance et un système de transmission de puissance présentant l'une quelconque des caractéristiques susmentionnées, entre l'arbre de rotor et l'arbre de puissance, le dispositif de récupération d'huile étant agencé pour récupérer et contenir l'huile éjectée par effet centrifuge du réducteur de vitesse.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente une coupe axiale et partielle d'une turbomachine comprenant un module de soufflante dont l'arbre de soufflante est entraîné par un arbre de puissance via un réducteur de vitesse installé dans une enceinte de lubrification ;
La figure 2 est une vue schématique, axiale et partielle d'une gouttière d'un dispositif de récupération de lubrifiant éjectée d'une couronne externe d'un réducteur de vitesse planétaire à train d'engrenage selon l'invention;
La figure 3 représente la partie inférieure de la gouttière du dispositif de récupération illustré sur la figure 2 ;
La figure 4 représente une variante de la figure 2 avec une gouttière dont une portion de paroi est coudée ;
La figure 5 illustre de manière schématique une autre variante de la gouttière selon la figure précédente dans laquelle une paroi de rétention empêche le débordement du lubrifiant d'une chambre de récupération de la gouttière ;
La figure 6 représente la partie inférieure d'une gouttière suivant une autre variante de la figure 2 dont une paroi s'évase vers une chambre de récupération ;
La figure 7 représente une autre variante de réalisation dans laquelle une chambre de récupération est agencée en amont de la gouttière et d'une bride radialement externe de la couronne externe du réducteur de vitesse ;
La figure 8 illustre un autre mode de réalisation de l'invention avec une gouttière d'un dispositif de récupération de lubrifiant comprenant deux chambres de récupération ;
La figure 9 illustre un autre mode de réalisation de l'invention dans lequel des moyens d'éjection de lubrifiant sont orientés dans une direction inclinée par un rapport un axe radial ; et,
La figure 10 est une vue en coupe axiale et partielle d'une partie d'un réducteur de vitesse comprenant des moyens d'éjection avec plusieurs canaux pour éjecter l'huile à la périphérie d'une bride du réducteur de vitesse.

### 6. Description de modes de réalisation de l'invention

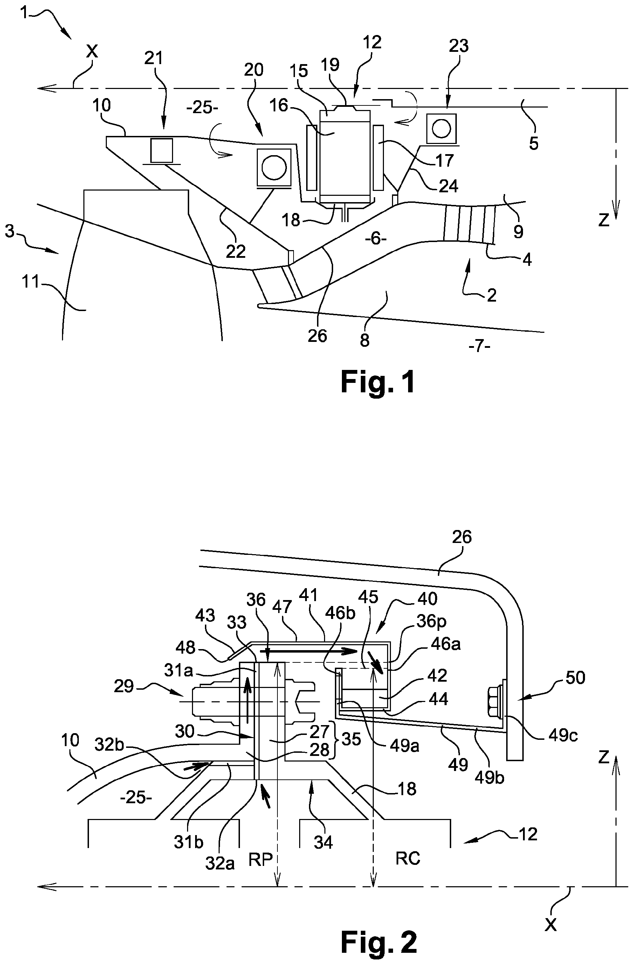

La figure 1 montre une vue en coupe axiale et partielle d'une turbomachine d'axe longitudinal X, en particulier une turbomachine double flux à laquelle s'applique l'invention. Bien entendu, l'invention n'est pas limitée à cette turbomachine. Elle peut s'appliquer par exemple à une turbomachine comprenant un doublet d'hélices contrarotatives tournant autour d'un axe longitudinal et désignée par l'expression « open rotor » en anglais pour hélices non carénées.

La turbomachine 1 double flux comprend de manière générale une nacelle externe (non représentée) enveloppant un générateur de gaz 2 en amont duquel est montée une soufflante 3. Dans la présente invention, et de manière générale, les termes « amont » et « aval » sont définis par rapport à la circulation des gaz dans la turbomachine qui est sensiblement parallèle à l'axe longitudinal X. De même, les termes « radial », « interne », « externe », « inférieur », « supérieur », « en-dessous » et « au-dessus » sont définis par rapport à un axe radial Z perpendiculaire à l'axe longitudinal X et au regard de l'éloignement par rapport à l'axe longitudinal X. Le générateur de gaz 2 comprend par exemple, d'amont en aval, un compresseur basse pression 4, un compresseur haute pression, une chambre de combustion, une turbine haute pression et une turbine basse pression. Le compresseur haute pression est relié à la turbine haute pression via un arbre haute pression pour former un corps haute pression. De même, le compresseur basse pression 4 est relié à la turbine basse pression via un arbre basse pression 5 pour former un corps basse pression. L'arbre basse pression 5 et l'arbre haute pression sont centrés sur l'axe longitudinal X.

La soufflante 3 est ici carénée par un carter de soufflante (non représenté) solidaire de la nacelle externe. La soufflante 3 comprime l'air entrant dans la turbomachine qui se divise en un flux primaire circulant dans une veine primaire 6 annulaire laquelle traverse le générateur de gaz 2 et un flux secondaire circulant dans une veine secondaire 7 annulaire autour du générateur de gaz 2. En particulier, la veine primaire 6 et la veine secondaire 7 sont séparées par un carter inter-veine 8 annulaire entourant le générateur de gaz 2. La soufflante 3 comprend une série de pales 11 qui s'étendent chacune radialement vers l'extérieur et sont délimitées radialement par le carter de soufflante.

Le module de soufflante est agencé en amont d'un carter interne 9 de la turbomachine qui est traversé par un arbre de rotor 10, ici l'arbre de soufflante qui est centré sur l'axe longitudinal X. L'arbre de soufflante 10 est entraîné en rotation par un arbre de puissance de la turbomachine via un mécanisme de transmission de puissance, d'un système de transmission de puissance, permettant de réduire la vitesse de rotation de la soufflante 3. Cet arbre de puissance est l'arbre basse pression 5 dans le présent exemple. Le mécanisme de transmission de puissance permet l'agencement d'une soufflante avec un diamètre important lequel engendre une augmentation du taux de dilution.

Le mécanisme de transmission de puissance comprend un réducteur de vitesse 12 formé d'un train d'engrenage et connu sous l'acronyme anglais RGB pour « Réduction Gear Box ». Le réducteur de vitesse est ici planétaire. Celui-ci comprend, tel qu'illustré de manière schématique sur la figure 1, un planétaire interne dénommé ici planétaire 15, des satellites 16, un porte-satellites 17 et un planétaire externe dénommé ici couronne externe 18. Dans le présent exemple, l'entrée du réducteur de vitesse 12 est couplée à l'arbre basse pression 5 tandis que la sortie du réducteur de vitesse 12 est couplée à l'arbre de soufflante 10.

Le réducteur de vitesse 12 comprend un arbre d'entrée 19, centré sur l'axe longitudinal X, solidaire en rotation avec l'arbre basse pression 5 et avec le planétaire 15 suivant l'axe longitudinal X. La couronne externe 18, centrée également sur l'axe longitudinal X, est solidaire en rotation avec l'arbre de soufflante 10 autour de l'axe longitudinal X. Les satellites 16, par exemple au nombre de cinq, sont portés par le porte-satellites 17 qui est monté fixe. Les satellites 16 tournent chacun autour d'un axe sensiblement parallèle à l'axe longitudinal X. Chacun des satellites 16, sous forme de pignon, présente des dents qui engrènent avec celles du planétaire 15, sous la forme d'une roue dentée, et avec la couronne externe 18 munie de dentures internes. En fonctionnement, le planétaire 15 est entraîné en rotation par l'arbre basse pression 5 suivant une première vitesse de rotation. Les satellites 16 sont entraînés en rotation par le planétaire 15 autour de leur axe suivant une deuxième vitesse de rotation. La couronne externe 18 qui engrène avec les satellites 16 est entraînée en rotation autour de l'axe longitudinal X et entraîne l'arbre de soufflante 10. La couronne externe 18 tourne suivant une troisième vitesse de rotation et dans un sens opposé à celui du planétaire 15.

De manière alternative, le réducteur de vitesse peut être un réducteur de vitesse différentiel à train d'engrenage épicycloïdal. Dans ce cas de figure, le planétaire, les satellites, le porte-satellites et la couronne externe sont tous mobiles.

En référence à la figure 1, des premier et deuxième paliers 20 et 21 permettent de porter et de guider en rotation l'arbre de soufflante 10 afin de supporter les charges radiales et axiales que subit celui-ci. Ces premier et deuxième paliers 20, 21 comprennent des éléments roulants qui sont montés chacun entre une première et une deuxième bague. Chaque première bague est montée sur l'arbre de soufflante 10 et chaque deuxième bague est montée sur une virole 22. Les éléments roulants du premier palier 20, monté au voisinage du réducteur de vitesse 12, sont ici des billes tandis que les éléments roulants du deuxième palier 21 sont des rouleaux. Les premier et deuxième paliers sont montés en amont du réducteur de vitesse 12. Plus précisément encore, le deuxième palier 21 est monté en amont du premier palier 20. De même, un troisième palier 23 est également prévu pour porter et guider en rotation l'arbre basse pression 5. Ce troisième palier 23 est situé en aval du réducteur de vitesse 12. Le troisième palier 23 comprend également une bague interne portée par l'arbre basse pression 5 et une bague externe portée par un support aval 24.

Les premier, deuxième, et troisième paliers 20, 21, 23, ainsi que les roues et pignons d'engrenage du réducteur de vitesse 12 sont contenus dans une enceinte 25 de lubrification annulaire formée par un ou plusieurs carter(s) fixe(s) 26 de la turbomachine. La virole 22 et le support aval 24 sont fixés au carter fixe 26 annulaire. Ce carter fixe 26 étant lui-même solidarisé au carter interne 9 de la turbomachine. L'enceinte 25 s'étend axialement et radialement de part et d'autre du réducteur de vitesse 12. Comme cela est illustré sur la figure 1, cette enceinte 25 est traversée au moins en partie axialement par l'arbre de soufflante 10 et par l'arbre basse pression 5.

Dans l'enceinte 25 circule un lubrifiant tel que de l'huile permettant de lubrifier et de refroidir en permanence les paliers et les organes rotatifs du réducteur de vitesse durant la marche de la turbomachine pour garantir le bon fonctionnement des paliers et du réducteur de vitesse. Pour cela, un système de lubrification (non représenté) comprend des canalisations qui pulvérisent de l'huile à travers le planétaire 15. L'huile est injectée dans les organes rotatifs au niveau des satellites 16 et du planétaire 15 puis de la couronne externe 18. L'huile est ensuite éjectée à l'extérieur de la couronne externe 18 par centrifugation grâce à des moyens d'éjection 30 représentés plus en détail sur la figure 2 et les suivantes. L'huile est également injectée au niveau des premier, deuxième et troisième paliers 20, 21, 23.

Sur la figure 2 est illustré un exemple de fixation entre l'arbre de soufflante 10 et la couronne externe 18 du réducteur de vitesse 12 en partie supérieure de ce dernier (point haut, à midi). Dans cet exemple de réalisation, la couronne 18 est monobloc (c'est-à-dire d'un seul tenant). En particulier, la couronne externe 18 comprend une patte annulaire 27 s'étendant radialement vers l'extérieur. Celle-ci comprend au moins en partie les moyens d'éjection comme décrit ci-après. Cette patte annulaire 27 est fixée sur une portée 28 annulaire de l'arbre de soufflante 10 via des moyens de fixation 29 tels que des vis. La portée 28 annulaire s'étend suivant l'axe radial Z à une extrémité libre de l'arbre de soufflante 10. Cette portée 28 est définie dans un plan parallèle ou sensiblement parallèle à celui dans lequel est définie la patte annulaire 27. La patte annulaire 27 et la portée 28 forment une bride 35. L'huile est éjectée de la couronne externe 18 au niveau de cette bride 35 via des moyens d'éjection 30 d'huile. Les moyens d'éjection 30 comprennent ici un ou plusieurs canaux 31 qui sont régulièrement répartis au moins sur la circonférence de la couronne externe 18.

De manière avantageuse, mais non limitativement, des premiers canaux 31a s'étendent sensiblement suivant l'axe radial Z. Chaque premier canal 31a s'étend radialement entre un orifice d'entrée 32a et un orifice de sortie 33. L'orifice d'entrée 32a est défini dans une surface interne 34 de la couronne externe 18 sur laquelle sont définies les dentures internes (non représentées). Quant à l'orifice de sortie 33, celui-ci débouche sur la périphérie de la bride 35 (périphérie annulaire 36 de la patte annulaire 27 et celle de la portée 28 qui sont affleurantes). Préférentiellement, mais non limitativement, il y a plusieurs orifices de sortie 33 répartis circonférentiellement sur la périphérie de la bride 35. Il y a au moins trois orifices de sortie 33 prévus sur la périphérie de la bride 35. L'huile circule depuis l'intérieur de la couronne externe 18 vers l'extérieur de cette dernière via le ou les canaux 31.

L'huile qui circule au niveau de la circonférence de la couronne externe 18 s'évacue également entre l'arbre de soufflante 10 et la couronne externe 18, et en particulier la bride 35, via le ou les canal(aux) 31. De manière avantageuse, mais non limitativement, des deuxièmes canaux 31b s'étendent sensiblement suivant l'axe longitudinal X. Chaque deuxième canal 31b s'étend axialement depuis un orifice d'entrée 32b et un premier canal 31a. En d'autres termes, les deuxièmes canaux 31b débouchent dans les premiers canaux 31a.

L'huile de lubrification est expulsée par les canaux 31 avec une vitesse radiale correspondant à la centrifugation exercée par le passage dans la couronne externe 18 et une vitesse tangentielle correspondant à l'entraînement en rotation à la troisième vitesse dans le sens de rotation de la couronne externe 18.

Le système de transmission de puissance est complété par un dispositif de récupération 40 d'huile qui est prévu pour récupérer et évacuer rapidement l'huile éjectée par effet centrifuge dans la turbomachine et en particulier dans l'enceinte 25. Ce dispositif de récupération 40 comprend une gouttière 41 annulaire destinée à récupérer l'huile éjectée du réducteur de vitesse 12. La gouttière 41, centrée sur l'axe longitudinal X, est agencée autour de la couronne externe 18. La gouttière 41 est fixée sur le carter fixe 26. La gouttière 41 comprend une chambre de récupération 42 dans laquelle transite une grande quantité d'huile avant son évacuation vers la partie inférieure de l'enceinte 25. La taille de la chambre de récupération permet d'accumuler ou de stocker temporairement l'huile de manière à limiter les débordements. La gouttière 41 comprend également une première portion de paroi 43 disposée au moins en partie en regard des moyens d'éjection 30 d'huile, ici les canaux 31, 31a, 31b et configurée de manière à diriger l'huile projetée par centrifugation sur celle-ci vers la chambre de récupération 42.

Comme cela est illustré sur la figure 2, la chambre de récupération 42 est disposée en aval de la gouttière 41, et ici en aval de la bride 35. La chambre de récupération 42 est ouverte. La chambre est orientée sensiblement radialement vers l'extérieur. En particulier, la chambre de récupération 42 présente une section axiale sensiblement en forme de U avec un fond 44, une ouverture d'entrée 45 opposée radialement au fond 44, une première et une deuxième parois latérales 46a, 46b (par rapport à l'axe longitudinal X). Les parois latérales 46a, 46b forment chacune une branche du U. L'ouverture d'entrée 45 est orientée radialement vers l'extérieur. La première portion de paroi 43 est située en vis-à-vis de la bride 35. En d'autres termes, la paroi 43 est située radialement à distance de la couronne (et de la patte annulaire, voire de la bride 35). Celle-ci est raccordée à une deuxième portion de paroi 47 laquelle est connectée à une des parois latérales 46a, 46b de la chambre de récupération 42 (ici la première paroi latérale 46a). La deuxième portion de paroi 47 s'étend sensiblement suivant l'axe longitudinal X avec une partie en regard des moyens d'éjection et de la couronne externe 18. Comme nous pouvons le voir également sur la figure 2, l'ouverture d'entrée 45 est agencée en regard de la paroi de la gouttière 41 (et en particulier d'une partie de la deuxième portion de paroi 47). Le fond 44 de la chambre de récupération 42 est orienté vers la couronne externe 18. Le raccordement entre la deuxième portion de paroi 47 et la première paroi latérale 46a présente ici sensiblement un angle droit.

La première portion de paroi 43 présente une section axiale conique ou tronconique de sorte à dévier l'huile vers la chambre de récupération 42, dans le présent exemple vers l'aval de la gouttière 41. En d'autres termes, la première portion de paroi 43 conique ou tronconique est disposée axialement à l'opposé de la chambre de récupération 42.

L'huile projetée sur la première portion de paroi 43 progresse le long de la deuxième portion de paroi 47 vers l'ouverture d'entrée 45 de la chambre de récupération 42. Une extrémité libre 48 de la première portion de paroi 43 est orientée vers l'intérieur de la turbomachine (vers le réducteur de vitesse 12). L'extrémité libre 48 se situe en amont de la bride 35 et notamment en amont de la portée 28 annulaire de l'arbre de soufflante 10. L'huile ne peut donc pas être projetée au-delà de l'extrémité libre 48, vers l'enceinte 25.

Par ailleurs, la gouttière 41 comprend une troisième portion de paroi 49 qui vient se fixer sur le carter fixe 26 par des organes de fixation 50 tels que des boulons ou des vis. La troisième portion de paroi 49 est couplée à l'une des parois latérales 46a, 46b de la chambre de récupération. Sur l'exemple représenté, la troisième portion de paroi 49 est solidarisée à la deuxième paroi latérale 46b adjacente à la patte annulaire 27 de la couronne externe 18. Nous voyons également que la troisième portion de paroi 49 présente une première partie radiale 49a qui est fixée à la deuxième paroi latérale 46b et une deuxième partie 49b qui s'étend radialement en-dessous du fond 44 de la chambre de récupération 42. A son extrémité aval une collerette 49c annulaire d'axe radial Z est fixée sur le carter fixe 26.

Dans le but de réduire l'encombrement radial de la gouttière, l'ouverture d'entrée 45 est définie dans un plan sensiblement radialement inférieur dans lequel est défini l'orifice de sortie 33 des moyens d'éjection, ici les canaux 31 et les orifices de sortie 33. La chambre de récupération 42 ne s'étend pas au-delà de l'orifice de sortie 33 des canaux. En d'autres termes, le rayon RC de la chambre de récupération 42 est égal ou inférieur à la hauteur radiale extérieure (rayon RP) de la patte annulaire 27 ou de la bride 35. Le rayon RP est défini comme étant la distance entre l'axe longitudinal X et la périphérie 36 annulaire de la patte annulaire 27 ou de la bride 35 tandis que le rayon RC de la chambre de récupération 42 est considéré comme étant la distance entre l'axe longitudinal X et l'ouverture d'entrée 45. La chambre de récupération 42 présente une hauteur suivant l'axe radial sensiblement égale ou inférieure à celui de la patte annulaire 27. Nous pouvons également dire, dans le cadre de la figure 2, que la projection orthogonale de la périphérie 36 annulaire (de la patte annulaire 27) sur la paroi latérale 46a de la chambre de récupération 42 forme une ligne au point 36P qui est agencée radialement à l'extérieur de la chambre de récupération. De même, la bride 35 se trouve radialement à l'intérieur de la gouttière 41.

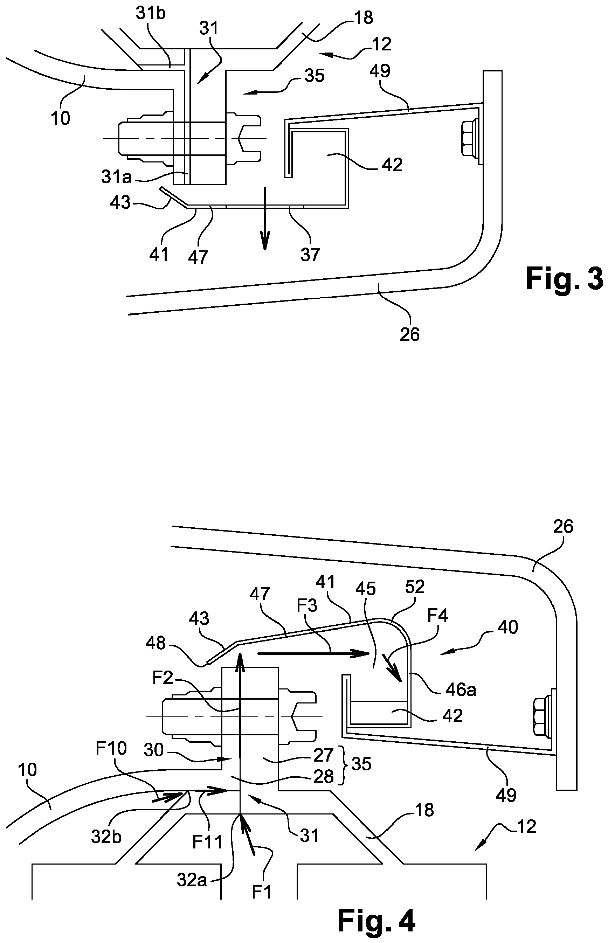

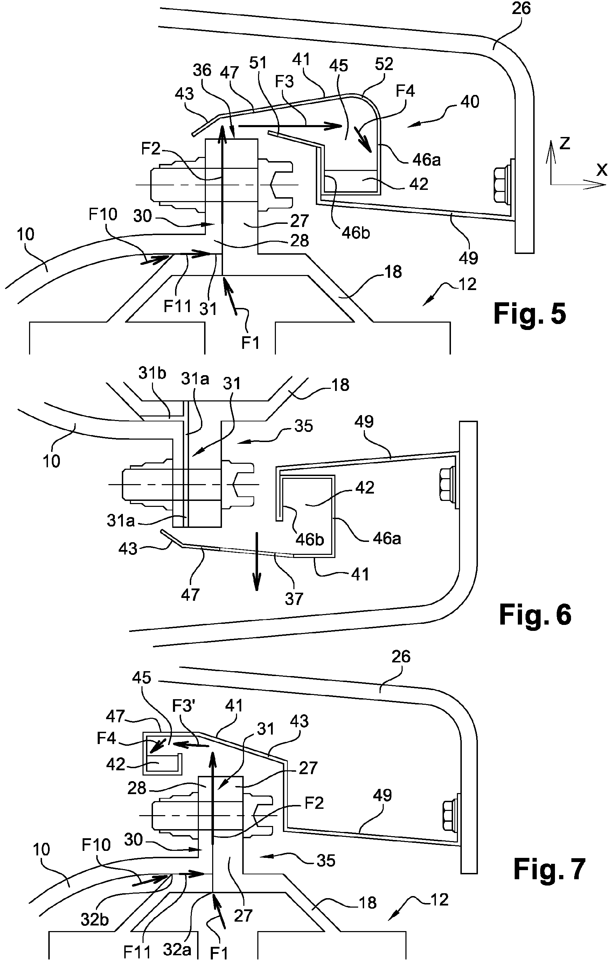

Sur la figure 3, la gouttière 41 est également munie d'une ouverture de sortie 37 d'axe radial orientée vers l'intérieur de la turbomachine. Bien entendu, la chambre de récupération peut comprendre plusieurs ouvertures de sortie 37. Chaque ouverture de sortie 37 est formée dans la deuxième portion de paroi 47 de la gouttière. Comme cela est illustré sur les figures 3 et 6, l'ouverture de sortie 37 est localisée au moins en partie au regard de la chambre de récupération 42. L'évacuation de l'huile est effectuée en partie inférieure de la gouttière 41 (soit vers l'extérieur du réducteur de vitesse) et vers la partie basse de l'enceinte 45, à six heures, pour retourner dans le circuit de lubrification du système de lubrification.

La gouttière 41 est réalisée dans un matériau métallique. De manière avantageuse, mais non limitativement, la gouttière 41 est réalisée à partir d'une tôle pour alléger le poids de celle-ci. Les parois 43, 44, 47, 46a, 46b, 49 sont obtenues par pliage ou par soudage. Le pliage et le soudage sont faciles et rapides à mettre en œuvre et nécessitent très peu d'outillage pour fabriquer la gouttière.

Sur la figure 4 est illustrée une variante du mode de réalisation décrit précédemment. La gouttière 41 de cette variante est sensiblement identique à celle décrite sur les figures 2 et 3 excepté la configuration de la deuxième portion de paroi 47 de la gouttière. En effet, dans cet exemple, la deuxième portion de paroi 47 présente une section axiale conique ou tronconique. Son extrémité amont, solidaire de la première portion de paroi 43, est orientée vers l'intérieur de la turbomachine. En d'autres termes, la deuxième portion de paroi 47 s'évase vers l'aval. La deuxième portion de paroi 47 comprend une partie coudée 52 qui se raccorde à la première paroi latérale 46a de la chambre de récupération 42 de sorte à optimiser la circulation de l'huile vers la chambre de récupération 42.

En fonctionnement, l'huile traverse le réducteur de vitesse et est éjectée par effet centrifuge de la couronne externe 18 en pénétrant par l'orifice ou les orifices d'entrée 32a suivant la flèche F1. L'huile qui entoure le réducteur de vitesse, progresse également sur la périphérie de la couronne externe 18 par effet centrifuge pour entrer dans l'orifice d'entrée 32b suivant la flèche F10. L'huile progresse ensuite dans les canaux 31 qui sont formés entre les parois de l'arbre de soufflante 10 et de la couronne externe 18 suivant les flèches F2 et F11 jusqu'à ce que celle-ci soit projetée sur la première portion de paroi 43 de la gouttière 41. L'huile progresse ensuite le long de la deuxième portion de paroi 47 suivant la flèche F3 vers l'ouverture d'entrée 45 de la chambre de récupération 42. Celle-ci pénètre enfin dans la chambre de récupération 42 suivant la flèche F4.

Sur la figure 5 est également illustrée une autre variante de réalisation de la gouttière 41 selon l'invention. Dans cette variante, la deuxième portion de paroi 47 présente une section axiale conique ou tronconique et la partie coudée 52 en aval de la gouttière 41 comme cela a été décrit pour la figure 4. Sur cet exemple, la gouttière 41 comprend une paroi de rétention 51 annulaire qui est solidarisée à la deuxième paroi latérale 46b de la chambre de récupération 42 pour améliorer la rétention de celle-ci. La paroi de rétention 51 borde l'ouverture d'entrée 45 de la chambre de récupération 42. Par ailleurs, la paroi de rétention 51 présente une inclinaison par rapport à l'axe radial Z. Celle-ci est en particulier orientée vers l'amont de la gouttière, soit vers la première portion de paroi 43 de la gouttière 41. Cette paroi de rétention est formée par pliage ou rapportée puis soudée sur la deuxième paroi latérale 46b. L'huile est projetée depuis les canaux 31 vers la gouttière 41 puis dans la chambre de récupération 42 de celle-ci suivant le même trajet décrit en relation avec la figure 4.

La figure 7 illustre un autre exemple de réalisation ,ne faisant pas partie de l'invention telle que revendiquée, dans lequel la chambre de récupération 42 est disposée en amont de la gouttière 41. Plus précisément, la chambre de récupération 42 se trouve en amont de la portée 28 annulaire de l'arbre de soufflante 10 et en amont des moyens d'éjection 30 d'huile comprenant ici les canaux 31. La première portion de paroi 43, opposée axialement à la chambre de récupération 42, est disposée en regard des moyens d'éjection 30 d'huile et entoure ceux-ci. Dans cet exemple, la troisième portion de paroi 49, solidarisée au carter fixe 26, est connectée à la première portion de paroi 43 conique ou tronconique. Cette troisième portion de paroi 49 s'étend en aval de la patte annulaire 27 de la couronne externe 18. Dans ce mode de réalisation, l'huile traverse le réducteur de vitesse et est éjectée par effet centrifuge de la couronne externe 18 en pénétrant par l'orifice ou les orifices d'entrée 32a suivant la flèche F1. L'huile qui entoure le réducteur de vitesse, progresse également sur la périphérie de la couronne externe 18 par effet centrifuge pour entrer dans l'orifice d'entrée 32b suivant la flèche F10. L'huile progresse ensuite dans les canaux 31 qui sont formés entre les parois de l'arbre de soufflante 10 et de la couronne externe 18 suivant les flèches F2 et F11 jusqu'à ce que celle-ci soit projetée sur la première portion de paroi 43 de la gouttière 41. L'huile progresse ensuite le long de la deuxième portion de paroi 47 suivant la flèche F3' vers l'ouverture d'entrée 45 de la chambre de récupération 42. Celle-ci pénètre enfin dans la chambre de récupération 42 suivant la flèche F4.

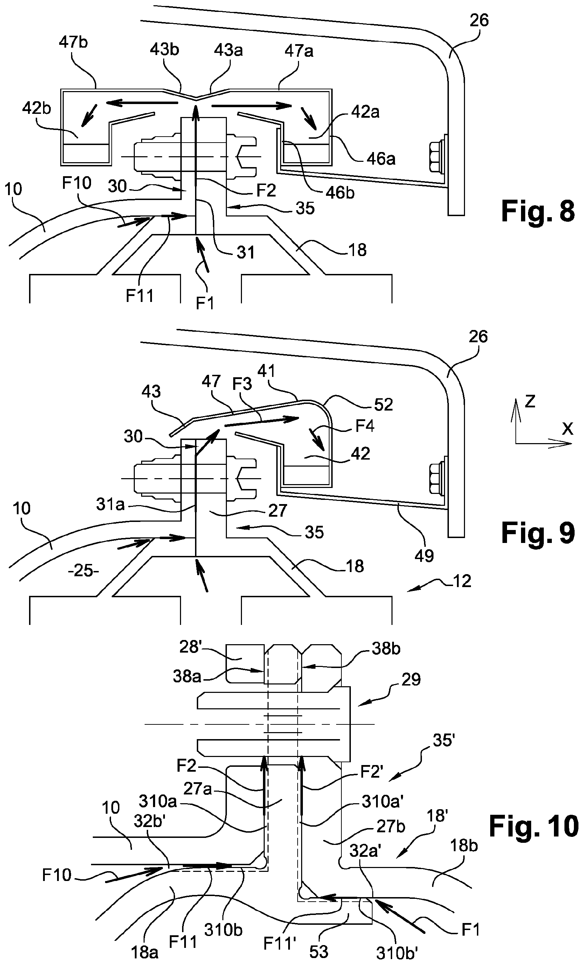

Un autre mode de réalisation est également illustré sur la figure 8. Dans cet exemple, la gouttière 41 comprend deux chambres de récupération 42a, 42b opposées axialement et disposées de part et d'autre des moyens d'éjection 30 d'huile. Ces chambres de récupération 42a, 42b présentent chacune des dimensions inférieures à celles des modes de réalisation précédents, ce qui permet également de réduire l'encombrement radial. Dans ce cas, la gouttière 41 comprend deux premières portions 43a, 43b de paroi conique ou tronconique en regard des moyens d'éjection d'huile 30. Celles-ci forment un V dont le sommet est orienté vers les moyens d'éjection 30. Chacune des premières portions de paroi 43a, 43b guide l'huile vers une chambre de récupération 42a, 42b. De manière avantageuse, mais non limitativement, chaque première portion de paroi 43a, 43b s'évase respectivement vers la chambre de récupération 42a, 42b correspondante dans laquelle l'huile est déviée. Chaque première portion de paroi 43a, 43b est reliée à une paroi latérale de la chambre de récupération par l'intermédiaire d'une deuxième portion de paroi 47a, 47b. Sur cet exemple, les deuxièmes portions de paroi 47a, 47b s'étendent suivant l'axe longitudinal mais celles-ci peuvent bien entendu s'évaser vers une chambre de récupération (section conique ou tronconique) comme représentée sur les figures 4 et 5. La paroi latérale 46a peut relier la deuxième portion de paroi 47b avec une partie coudée 52 ou en formant un angle droit. Lorsque l'huile est projetée sur la première portion de paroi 43a (en aval de la bride 35 sur la figue 8), l'huile est dirigée vers la chambre de récupération 42a (en aval de la bride 35) en progressant le long de la deuxième paroi 47a. L'huile projetée sur la première portion de paroi 43b est dirigée vers la chambre de récupération 42b (en amont de la bride 35) de la même manière.

Sur la figure 9 est illustrée une variante des gouttières décrites en relation avec les figures 2 à 8. Dans cet exemple de réalisation, les moyens d'éjection 30 présentent au moins une partie avec une orientation angulaire par rapport à l'axe radial Z. En particulier, chaque canal d'éjection 31a des moyens d'éjection 30 a une portion qui est inclinée suivant un angle d'environ 45° avec l'axe radial Z et est orientée vers la deuxième portion de paroi 47. Avantageusement, chaque canal 31a est orienté (vers l'extrémité radiale extérieure de celui-ci) en direction de la chambre de récupération 42 selon si cette dernière est amont ou en aval des moyens d'éjection 30 ou de la bride 35 pour éviter les éclaboussures d'huile dans la gouttière et dans l'enceinte 25. Dans cet exemple, l'huile est projetée directement sur la deuxième paroi 47 (flèche F3) puis progresse le long de celle-ci jusqu'à atteindre la chambre de récupération (flèche F4). La première portion de paroi 43 permet également dans ce cas de figure d'orienter des éclaboussures d'huile éventuelles vers la chambre de récupération 42.

Suivant un autre mode de réalisation illustré sur la figure 10, la couronne externe 18' est formée en deux parties. Celle-ci n'est donc plus monobloc comme illustré sur les figures 2 à 9. La patte annulaire portée par la couronne externe 18' est également réalisée en deux parties. En d'autres termes, la bride 35' est formée de trois parties (portée et patte annulaire en deux parties). Une telle configuration permet de fabriquer encore plus facilement la couronne et de faciliter la récupération de l'huile. En effet, la couronne externe 18' comprend une première partie 18a de couronne qui est munie d'une première partie de patte annulaire 27a. Cette dernière s'étend radialement vers l'extérieur. La couronne comprend une deuxième partie 18b de couronne qui est munie d'une deuxième partie de patte annulaire 27b. La deuxième partie de patte annulaire 27b s'étend radialement vers l'extérieur. La première partie de couronne comprend une saille 53 annulaire qui s'étend suivant l'axe longitudinal depuis l'extrémité radiale interne de la première partie de patte annulaire 27a. La saillie 53 est agencée radialement en-dessous de la deuxième partie de patte annulaire 27b et d'une portion de la deuxième partie de couronne 18b. Autrement dit, la deuxième partie de patte annulaire 27b repose sur la saillie 53. La première partie 18a de couronne est agencée axialement entre l'arbre de soufflante 10 et la deuxième partie 18b de couronne. De même, la première partie de patte annulaire 27a est agencée axialement entre la portée 28' annulaire de l'arbre de soufflante 10 et la deuxième partie de patte annulaire 27b. Des premiers canaux 310a sont formés entre la face radiale de la portée 28 et une première paroi radiale 38a de la première partie de patte annulaire 27a. Chaque premier canal 310a est relié à un deuxième canal 310b formés sur la circonférence de la première partie de couronne 18a.

Des premiers canaux 310a' sont également formés entre une deuxième paroi radiale 38b de la première partie de patte annulaire 27a et la surface radiale de la deuxième partie de patte annulaire 27b. Les première et deuxième parois radiales 38a, 38b sont opposées axialement l'une à l'autre. Chaque premier canal 310a' est relié à un deuxième canal 310b' formés sur la circonférence de la première partie de couronne 18b (en particulier sur la circonférence de la saillie 53). De la sorte, l'huile traverse le réducteur de vitesse 12 et est éjectée par effet centrifuge de la couronne externe 18' en pénétrant par l'orifice ou les orifices d'entrée 32a' suivant la flèche F1. L'huile qui entoure le réducteur de vitesse, progresse également sur la périphérie de la couronne externe 18' par effet centrifuge pour entrer dans l'orifice d'entrée 32b' suivant la flèche F10. L'huile progresse ensuite dans les deuxièmes canaux 310b, 310b', puis dans premiers les canaux 310a, 310a' qui sont formés entre les parois de l'arbre de soufflante 10 et des première et deuxième parties de patte annulaire 27a, 27b de la couronne externe 18' suivant les flèches F11, F11', F2, F2' jusqu'à ce que celle-ci soit projetée sur la gouttière 41 puis dans une chambre de récupération 42 ou dans deux chambres de récupération 42a, 42b.

Ainsi, avec une gouttière de la sorte on réduit l'encombrement radial et éventuellement l'encombrement axial dans la turbomachine, notamment avec une couronne externe 18, 18' rotative par rapport à un carter fixe, de manière à ne pas impacter la masse de celle-ci. La chambre de récupération 42 42a, 42b permet une récupération totale de l'huile centrifugée à travers la couronne externe 18, 18' du réducteur de vitesse 12.

## Revendications

1. Système de transmission de puissance d'une turbomachine entre un arbre de rotor (10) d'axe longitudinal X et un arbre de puissance (5) d'axe longitudinal X, le système de transmission comprenant
- un carter fixe (26) annulaire de la turbomachine,
- un réducteur de vitesse (12) apte à réduire la vitesse de l'arbre de rotor (10), ledit réducteur de vitesse (12) comprenant un planétaire (15) configuré pour être solidaire en rotation de l'arbre de puissance (5), une couronne externe (18 ; 18') configurée pour entraîner en rotation l'arbre de rotor (10) suivant l'axe longitudinal X, et un porte-satellites (17), et
- un dispositif de récupération (40) d'huile éjectée par effet centrifuge dans la turbomachine (1), le dispositif de récupération (40) comprenant une gouttière (41) annulaire destinée à récupérer l'huile éjectée du réducteur de vitesse (12), la gouttière (41) étant solidarisée au carter fixe (26) annulaire entourant ladite gouttière (41) et comportant une chambre de récupération (42 ; 42a, 42b) et une première portion de paroi (43 ; 43a, 43b) disposée au moins en partie en regard de moyens d'éjection (30) d'huile du réducteur de vitesse (12) de manière à diriger l'huile projetée sur celle-ci vers la chambre de récupération (42 ; 42a, 42b),
**caractérisé en ce que** la couronne externe (18, 18') comprend une patte annulaire (27 ; 27a, 27b) s'étendant vers l'extérieur suivant un axe radial Z perpendiculaire à l'axe longitudinal X et comportant au moins en partie les moyens d'éjection éjectant l'huile de la couronne externe et **en ce que** la chambre de récupération (42 ; 42a, 42b) est pourvue d'une ouverture d'entrée (45) orientée radialement vers l'extérieur et définie dans un plan radialement inférieur à un plan dans lequel est défini un orifice de sortie (33) que comprennent les moyens d'éjection (30).

2. Système de transmission de puissance selon la revendication précédente, **caractérisé en ce que** la couronne externe (18) comprend une périphérie (36) annulaire et la projection orthogonale de la périphérie (36) annulaire est agencée radialement à l'extérieur de la chambre de récupération (42 ; 42a, 42b).

3. Système de transmission de puissance selon l'une quelconque des revendications précédentes, **caractérisé en ce que** la chambre de récupération (42) est disposée en amont de la patte annulaire (27) de la couronne externe (18, 18'), la première portion de paroi (43) étant reliée à une troisième portion de paroi (49) s'étendant en aval de la patte annulaire (27).

4. Système de transmission de puissance selon l'une quelconque des revendications précédentes, **caractérisé en ce que** la chambre de récupération (42 ; 42a, 42b) présente une section axiale sensiblement en forme en U.

5. Système de transmission de puissance selon la revendication précédente, **caractérisé en ce que** la chambre de récupération (42 ; 42a, 42b) comprend une paroi de rétention (51) annulaire solidarisée à une des parois latérales (46a, 46b) formant une branche du U de la chambre de récupération (42 ; 42a, 42b) et bordant au moins une partie de l'ouverture d'entrée (45).

6. Système de transmission de puissance selon l'une quelconque des revendications précédentes, **caractérisé en ce que** la première portion de paroi (43 ; 42a, 43b) présente une section axiale conique ou tronconique.

7. Système de transmission de puissance selon l'une quelconque des revendications précédentes, **caractérisé en ce que** la première portion de paroi (43 ; 43a, 43b) est disposée axialement à l'opposé de la chambre de récupération (42 ; 42a, 42b).

8. Système de transmission de puissance selon l'une quelconque des revendications précédentes, **caractérisé en ce que** la gouttière (41) est munie d'une ouverture de sortie (37) d'axe radial située dans une partie la plus inférieure du réducteur de vitesse suivant l'axe radial et orientée vers l'extérieur du réducteur de vitesse

9. Système de transmission de puissance selon l'une quelconque des revendications précédentes, **caractérisé en ce que** la gouttière (41) est réalisée à partir d'une tôle.

10. Système de transmission de puissance selon l'une quelconque des revendications précédentes, **caractérisé en ce que** la gouttière (41) comprend deux chambres de récupération (42a, 42b) opposées axialement et disposées de part et d'autre des moyens d'éjection (30) d'huile.

11. Système de transmission de puissance selon l'une quelconque des revendications précédentes, **caractérisé en ce que** les moyens d'éjection (30) d'huile présentent une orientation angulaire par rapport à l'axe radial, l'orientation comprenant une composante axiale selon l'axe longitudinal vers la gouttière (41).

12. Système de transmission de puissance selon l'une quelconque des revendications précédentes, **caractérisé en ce que** la couronne externe (18, 18') est fixée sur l'arbre de rotor (10) au moyen d'une bride (35, 35') laquelle comprend au moins en partie les moyens d'éjection (30) d'huile par laquelle s'éjecte l'huile par effet centrifuge.

13. Système de transmission de puissance selon la revendication précédente, **caractérisé en ce que** la bride (35, 35') est formée d'une portée annulaire solidaire de l'arbre de rotor (10) et s'étendant radialement vers l'extérieur et de la patte annulaire de la couronne externe, la patte annulaire et la portée annulaire étant en appui l'une contre l'autre, les moyens d'éjection comprenant des canaux formés entre la portée annulaire et la patte annulaire.

14. Système de transmission de puissance selon l'une quelconque des revendications 1 à 12, **caractérisé en ce que** la couronne externe (18, 18') est formée en deux parties avec une première partie (18a) de couronne et une deuxième partie (18b) de couronne, et la bride (35, 35') est formée en trois parties avec une première partie de patte annulaire (27a) s'étendant radialement vers l'extérieur et solidaire de la première partie (18a) de couronne, une deuxième partie de patte annulaire (27b) s'étendant radialement vers l'extérieur et solidaire de la deuxième partie (18b) de couronne, et une portée annulaire (28') s'étendant radialement vers l'extérieur et solidaire de l'arbre de rotor (10), les moyens d'éjection (30) d'huile comprenant des canaux formés au moins entre la portée annulaire (28'), les première et deuxième parties de patte annulaire (27a, 27b).

15. Turbomachine (1) comportant un arbre de rotor (10), un arbre de puissance (5) et un système de transmission de puissance selon l'une quelconque des revendications précédentes, entre l'arbre de rotor (10) et l'arbre de puissance (5), le dispositif de récupération (40) étant agencé pour récupérer l'huile éjectée par effet centrifuge du réducteur de vitesse (12).

## Patentansprüche

1. Leistungsübertragungssystem einer Turbomaschine zwischen einer Rotorwelle (10) mit Längsachse X und einer Leistungswelle (5) mit Längsachse X, wobei das Übertragungssystem umfasst
- ein ringförmiges festes Gehäuse (26) der Turbomaschine,
- ein Untersetzungsgetriebe (12), das geeignet ist, die Geschwindigkeit der Rotorwelle (10) zu verringern, wobei das Untersetzungsgetriebe (12) ein Zentralrad (15), konfiguriert, um mit der Leistungswelle (5) drehfest verbunden zu sein, einen Außenkranz (18 ; 18'), konfiguriert, um die Rotorwelle (10) der Längsachse X folgend in Drehung zu versetzen, und einen Planetenträger (17) umfasst, und
- eine Wiedergewinnungsvorrichtung (40) von Öl, das durch Fliehkraftwirkung in der Turbomaschine (1) ausgestoßen wird, wobei die Wiedergewinnungsvorrichtung (40) eine ringförmige Rinne (41) umfasst, dazu bestimmt, das aus dem Untersetzungsgetriebe (12) ausgestoßene Öl zurückzugewinnen, wobei die Rinne (41) mit dem ringförmigen festen Gehäuse (26), das die Rinne (41) umgibt, fest verbunden ist und eine Wiedergewinnungskammer (42 ; 42a, 42b) und einen ersten Wandabschnitt (43 ; 43a, 43b) umfasst, der mindestens zum Teil den Ausstoßmitteln (30) von Öl des Untersetzungsgetriebes (12) zugewandt ist, sodass das auf diesen gespritzte Öl in Richtung der Wiedergewinnungskammer (42 ; 42a, 42b) geleitet wird,
**dadurch gekennzeichnet, dass** der Außenkranz (18, 18') eine ringförmige Lasche (27 ; 27a, 27b) umfasst, die sich einer radialen Achse Z folgend, senkrecht zur Längsachse X, in Richtung der Außenseite erstreckt und mindestens zum Teil die Ausstoßmittel umfasst, die das Öl des Außenkranzes ausstoßen, und dadurch, dass die Wiedergewinnungskammer (42; 42a, 42b) mit einer Eintrittsöffnung (45) versehen ist, die radial in Richtung der Außenseite orientiert und in einer Ebene radial unterhalb von einer Ebene definiert ist, in der eine Ausgangsbohrung (33) definiert ist, die die Ausstoßmittel (30) umfassen.

2. Leistungsübertragungssystem nach dem vorstehenden Anspruch, **dadurch gekennzeichnet, dass** der Außenkranz (18) einen ringförmigen Randbereich (36) umfasst und die orthogonale Projektion des ringförmigen Randbereichs (36) radial an der Außenseite der Wiedergewinnungskammer (42 ; 42a, 42b) angebracht ist.

3. Leistungsübertragungssystem nach einem der vorstehenden Ansprüche, **dadurch gekennzeichnet, dass** die Wiedergewinnungskammer (42) der ringförmigen Lasche (27) des Außenkranzes (18, 18') vorgelagert angeordnet ist, wobei der erste Wandabschnitt (43) an einen dritten Wandabschnitt (49) gekoppelt ist, der sich der ringförmigen Lasche (27) nachgelagert erstreckt.

4. Leistungsübertragungssystem nach einem der vorstehenden Ansprüche, **dadurch gekennzeichnet, dass** die Wiedergewinnungskammer (42 ; 42a, 42b) einen im Wesentlichen U-förmigen axialen Querschnitt aufweist.

5. Leistungsübertragungssystem nach dem vorstehenden Anspruch, **dadurch gekennzeichnet, dass** die Wiedergewinnungskammer (42 ; 42a, 42b) eine ringförmige Rückhaltewand (51) umfasst, die mit einer der Seitenwände (46a, 46b) fest verbunden ist, die einen Schenkel des U der Wiedergewinnungskammer (42 ; 42a, 42b) bilden und mindestens an einen Teil der Eintrittsöffnung (45) angrenzen.

6. Leistungsübertragungssystem nach einem der vorstehenden Ansprüche, **dadurch gekennzeichnet, dass** der erste Wandabschnitt (43 ; 42a, 43b) einen konischen oder kegelstumpfförmigen axialen Querschnitt aufweist.

7. Leistungsübertragungssystem nach einem der vorstehenden Ansprüche, **dadurch gekennzeichnet, dass** der erste Wandabschnitt (43 ; 43a, 43b) der Wiedergewinnungskammer (42 ; 42a, 42b) axial gegenüberliegend angeordnet ist.

8. Leistungsübertragungssystem nach einem der vorstehenden Ansprüche, **dadurch gekennzeichnet, dass** die Rinne (41) mit einer Austrittsöffnung (37) mit radialer Achse ausgestattet ist, die der radialen Achse folgend in einem untersten Teil des Untersetzungsgetriebes situiert und in Richtung der Außenseite des Untersetzungsgetriebes orientiert ist

9. Leistungsübertragungssystem nach einem der vorstehenden Ansprüche, **dadurch gekennzeichnet, dass** die Rinne (41) von einem Blech ausgehend ausgeführt ist.

10. Leistungsübertragungssystem nach einem der vorstehenden Ansprüche, **dadurch gekennzeichnet, dass** die Rinne (41) zwei axial gegenüberliegende und auf beiden Seiten der Ausstoßmittel (30) von Öl angeordnete Wiedergewinnungskammern (42a, 42b) umfasst.

11. Leistungsübertragungssystem nach einem der vorstehenden Ansprüche, **dadurch gekennzeichnet, dass** die Ausstoßmittel (30) von Öl bezogen auf die radiale Achse eine Winkelorientierung aufweisen, wobei die Orientierung eine axiale Komponente entsprechend der Längsachse in Richtung der Rinne (41) umfasst.

12. Leistungsübertragungssystem nach einem der vorstehenden Ansprüche, **dadurch gekennzeichnet, dass** der Außenkranz (18, 18') auf der Rotorwelle (10) mittels eines Flanschs (35, 35') befestigt ist, der mindestens zum Teil die Ausstoßmittel (30) von Öl umfasst, durch die das Öl durch Fliehkraftwirkung ausgestoßen wird.

13. Leistungsübertragungssystem nach dem vorstehenden Anspruch, **dadurch gekennzeichnet, dass** der Flansch (35, 35') von einer ringförmigen Auflagefläche gebildet wird, die mit der Rotorwelle (10) fest verbunden ist und sich radial in Richtung der Außenseite und der ringförmigen Lasche des Außenkranzes erstreckt, wobei die ringförmige Lasche und die ringförmige Auflagefläche aneinander anliegen, wobei die Ausstoßmittel zwischen der ringförmigen Auflagefläche und der ringförmigen Lasche gebildete Kanäle umfassen.

14. Leistungsübertragungssystem nach einem der Ansprüche 1 bis 12, **dadurch gekennzeichnet, dass** der Außenkranz (18, 18') aus zwei Teilen gebildet ist, mit einem ersten Teil (18a) des Kranzes und einem zweiten Teil (18b) des Kranzes, und der Flansch (35, 35') aus drei Teilen gebildet ist, mit einem ersten Teil der ringförmigen Lasche (27a), der sich radial in Richtung der Außenseite erstreckt und mit dem ersten Teil (18a) des Kranzes fest verbunden ist, einem zweiten Teil der ringförmigen Lasche (27b), der sich radial in Richtung der Außenseite erstreckt und mit dem zweiten Teil (18b) des Kranzes fest verbunden ist, und einer Auflagefläche (28'), die sich radial in Richtung der Außenseite erstreckt und mit der Rotorwelle (10) fest verbunden ist, wobei die Ausstoßmittel (30) von Öl Kanäle umfassen, die mindestens zwischen der ringförmigen Auflagefläche (28'), dem ersten und zweiten Teil der ringförmigen Lasche (27a, 27b) gebildet sind.

15. Turbomaschine (1), umfassend eine Rotorwelle (10), eine Leistungswelle (5) und ein Leistungsübertragungssystem nach einem der vorstehenden Ansprüche zwischen der Rotorwelle (10) und der Leistungswelle (5), wobei die Wiedergewinnungsvorrichtung (40) zum Wiedergewinnen von durch Fliehkraftwirkung des Untersetzungsgetriebes (12) ausgestoßenem Öl angebracht ist.

## Claims

1. A power transmission system of a turbomachine between a rotor shaft (10) with a longitudinal axis X and a power shaft (5) with a longitudinal axis X, the transmission system including:
- a fixed annular housing (26) of the turbine engine,
- a speed reducer (12) capable of reducing the speed of the rotor shaft (10), said speed reducer (12) including a sun gear (15) configured to be rotationally secured with the power shaft (5), an outer ring gear (18; 18') configured to drive in rotation the rotor shaft (10) along the longitudinal axis X, and a planet carrier (17), and
- a device (40) for recovering oil ejected by centrifugal effect into the turbomachine (1), the recovery device (40) including an annular gutter (41) intended to recover the oil ejected from the speed reducer (12), the gutter (41) being integral with the fixed annular housing (26) surrounding said gutter (41) and including a recovery chamber (42 ; 42a, 42b) and a first wall portion (43; 43a, 43b) disposed at least partially facing oil ejection means (30) of the speed reducer (12) so as to direct the oil projected thereon toward the recovery chamber (42; 42a, 42b),
**characterized in that** the outer ring gear (18, 18') includes an annular tab (27 ; 27a, 27b) extending outwardly along a radial axis Z perpendicular to the longitudinal axis X and including at least in part the ejection means ejecting the oil from the outer ring gear and **in that** the recovery chamber (42; 42a, 42b) is provided with an inlet opening (45) directed radially outwardly and defined in a plane radially lower than a plane in which is defined an outlet port (33) which includes the ejection means (30).

2. The power transmission system according to the preceding claim, **characterized in that** the outer ring gear (18) comprises an annular periphery (36) and the orthogonal projection of the annular periphery (36) is arranged radially outside the recovery chamber (42; 42a, 42b).

3. The power transmission system according to any of the preceding claims, **characterized in that** the recovery chamber (42) is arranged upstream of the annular tab (27) of the outer ring gear (18, 18'), the first wall portion (43) being connected to a third wall portion (49) extending downstream of the annular tab (27).

4. The power transmission system according to any of the preceding claims, **characterized in that** the recovery chamber (42; 42a, 42b) has a substantially U-shaped axial section.

5. The power transmission system according to the preceding claim, **characterized in that** the recovery chamber (42; 42a, 42b) includes an annular retention wall (51) secured to one of the side walls (46a, 46b) forming a branch of the U of the recovery chamber (42; 42a, 42b) and bordering at least a portion of the inlet opening (45).

6. The power transmission system according to any of the preceding claims, **characterized in that** the first wall portion (43; 42a, 43b) has a conical or frustoconical axial section.

7. The power transmission system according to any of the preceding claims, **characterized in that** the first wall portion (43; 43a, 43b) is arranged axially opposite the recovery chamber (42; 42a, 42b).

8. The power transmission system according to any of the preceding claims, **characterized in that** the gutter (41) is provided with a radial axis outlet opening (37) located in the lowest part of the speed reducer along the radial axis and oriented towards the outside of the speed reducer.

9. The power transmission system according to any of the preceding claims, **characterized in that** the gutter (41) is made from a sheet metal.

10. The power transmission system according to any of the preceding claims, **characterized in that** the gutter (41) includes two axially opposed recovery chambers (42a, 42b) and arranged on either side of the oil ejection means (30).

11. The power transmission system according to any of the preceding claims, **characterized in that** the oil ejection means (30) have an angular orientation with respect to the radial axis, the orientation including an axial component along the longitudinal axis towards the gutter (41).

12. The power transmission system according to any of the preceding claims, **characterized in that** the outer ring gear (18, 18') is fixed on the rotor shaft (10) by means of a flange (35, 35') which includes at least in part the oil ejection means (30) through which the oil is ejected by centrifugal effect.

13. The power transmission system according to the preceding claim, **characterized in that** the flange (35, 35') is formed of an annular support secured with the rotor shaft (10) and extending radially outwardly and the annular tab of the outer ring gear, the annular tab and the annular support being in support of each other, the ejection means including channels formed between the annular support and the annular tab.

14. The power transmission system according to any of claims 1 to 12, **characterized in that** the outer ring gear (18, 18') is formed in two portions with a first ring portion (18a) and a second ring portion (18b), and the flange (35, 35') is formed in three portions with a first annular tab portion (27a) extending radially outwardly and integral with the first ring portion (18a), a second annular tab portion (27b) extending radially outwardly and integral with the second ring portion (18b), and an annular support (28') extending radially outwardly and integral with the rotor shaft (10), the oil ejection means (30) including channels formed at least between the annular support (28'), the first and second annular tab portions (27a, 27b).

15. A turbomachine (1) including a rotor shaft (10), a power shaft (5) and a power transmission system according to any of the preceding claims, between the rotor shaft (10) and the power shaft (5), the recovery device (40) being arranged to recover the oil ejected by centrifugal effect from the speed reducer (12).
